# EUROPÄISCHE PATENTSCHRIFT

(11) **EP 2 910 085 B1**
(45) Veröffentlichungstag und Bekanntmachung des Hinweises auf die Patenterteilung: **13.12.2017**
(21) Anmeldenummer: 13776456.9
(22) Anmeldetag: 09.10.2013
(51) Int. Cl.: H05B 7/144, G05F 1/20

(54) **VORRICHTUNG UND VERFAHREN ZUR PROZESSGEFÜHRTEN LEISTUNGSREGELUNG EINES LICHTBOGENOFENS**
DEVICE AND METHOD FOR THE PROCESS-BASED POWER CONTROL OF AN ELECTRIC ARC FURNACE
DISPOSITIF ET PROCÉDÉ DE RÉGLAGE PILOTÉ PAR LE PROCESSUS DE LA PUISSANCE D'UN FOUR À ARC ÉLECTRIQUE

(30) Priorität: 16.10.2012 DE 102012109847
(43) Veröffentlichungstag der Anmeldung: 26.08.2015
(73) Patentinhaber: Maschinenfabrik Reinhausen GmbH, 93059 Regensburg (DE)
(72) Erfinder: KRÜGER, Klaus, 83416 Saaldorf-Surheim (DE); DOHNAL, Dieter, 93138 Lappersdorf (DE); VIERECK, Karsten, 93059 Regensburg (DE); BABIZKI, Alexei, 93049 Regensburg (DE)
(86) Internationale Anmeldenummer: PCT/EP2013/071030
(87) Internationale Veröffentlichungsnummer: WO 2014/060256

(56) Entgegenhaltungen:
- WO-A2-02/063927
- WO-A2-2012/104232
- DE-A1-102009 053 169
- DE-C2- 3 512 189
- US-A1- 2011 216 802

## Beschreibung

Die Erfindung betrifft eine Vorrichtung zur prozessgeführten Leistungsregelung eines Lichtbogenofens. Im Besonderen sieht hierzu die Vorrichtung mehrere Sensortypen zur Erfassung aktueller Betriebsparameter des Lichtbogenofens in Abhängigkeit von der Zeit vor. Einer Steuer- und Regeleinheit werden die aktuellen Betriebsparameter übergeben und ein entsprechender Regelalgoritmus errechnet die erforderliche Regelung. Die Regelung des Lichtbogenofens wird mittels mindestens eines Ofentransformators durchgeführt. Die Steuer- und Regeleinheit wirkt mit mindestens einen Laststufenschalter zusammen, wobei Wicklungsanzapfungen auf der Primärseite des Ofentransformators mit einem Laststufenschalters beschaltbar sind. Drei Elektroden sind mit der Sekundärseite des mindestens einen Ofentransformators elektrisch verbunden und sind jeweils in einem Strang angeordnet.

Ferner betrifft die Erfindung Verfahren zur thermisch-basierten Leistungsregelung eines Lichtbogenofens.

Die deutsche Patentschrift DE 35 12 189 C1 offenbart ein Verfahren und eine Vorrichtung zur Regelung von Lichtbogenöfen. Dabei soll eine exakte wirtschaftliche und technisch ohne großen Aufwand realisierbare Einstellung der Lichtbogenspannung und der Elektrodenhöhenstandsstellung ermöglicht werden. Das Stellglied des Elektrodenhöhenstandes wird stets von einem Stromregelkreis (bzw. Impedanzregelkreis) angesteuert, dem im Fall einer Leistungsregelung ein Leistungsregelkreis überlagert ist. Der dem Stromregler überlagerte Leistungsregler liefert dann neben der Transformatorstufe ggf. die Führungsgröße für den Stromregler. Auf die Elektrodenverstellung wirkt in allen Fällen unmittelbar nur der Stromregler ein. Somit ergibt sich für den verwendeten Stufenschalterantrieb des Transformators entweder die Möglichkeit, die mittels des Stufenschalters einstellbare Transformatorspannung direkt über ein Fahrdiagramm zuzuführen oder mittels des genannten Leistungsregler einzustellen. Der Hubantrieb der Elektroden wird über den Stromregler angesteuert.

Die europäische Patentanmeldung EP 2 362 710 A1 offenbart einen Lichtbogenofen und ein Verfahren zum Betrieb eines Lichtbogenofens. Der der wenigstens einen Elektrode zugeordnete Lichtbogen weist eine erste Strahlungsleistung auf, die sich auf Grundlage eines ersten eingestellten Betriebsparametersatzes ergibt. Der Lichtbogenofen wird gemäß einem vorgegebenen Fahrprogramm betrieben, das auf einem erwarteten Prozessverlauf beruht. Es wird überwacht, ob zwischen dem tatsächlichem Prozessverlauf und dem erwarteten Prozessverlauf eine unerwünschte Abweichung vorliegt. Indem bei Vorliegen einer Abweichung eine geänderte zweite Strahlungsleistung vorgegeben wird. Anhand der geänderten zweiten Strahlungsleistung wird ein geänderter zweiter Betriebsparametersatz ermittelt wird. Das Verfahren erlaubt eine möglichst geringe Einschmelzdauer bei einer Schonung der Betriebsmittel, insbesondere des Ofengefäßes, zu erzielen. Die internationale Anmeldung WO 02/06 39 27 A2 beschreibt ein Leistungssteuerungssystem für einen Wechselstrom betriebenen Lichtbogenofen, das zwischen der Wechselstromquelle und jeder Elektrode jeweils eine regelbaren Reaktanz und einen regelbaren Lichtbogentransformator umfasst und diese steuert. Die regelbare Reaktanz besteht aus einer ersten Drossel und einer parallel dazu geschalteten Reihenschaltung aus einer zweiten Drossel und einem gegensinnig geschaltetem Thyristorpaar. Die Reaktanz wird mittels einer Reaktanzsteuerung gesteuert, indem die Thyristoren gezielt den durchfließenden Strom ein- und ausschalten und dabei auf die durch den Einschmelzprozess verursachten Blindleistungs- und Wirkleistungsschwankungen reagieren und kompensieren. Jeder Elektrode sind ein Stromsensor und ein Spannungssensor zugeordnet. Das Leistungssteuerungssystem regelt die Reaktanz, die Stufenstellung des Lichtbogentransformators und die Höhe der Elektroden. Der Stufenschalter wählt und beschaltet die einzelnen Anzapfung.

Die deutsche Offenlegungsschrift DE 35 43 773 A1 beschreibt ein Verfahren zum Betrieb eines Lichtbogenofens, so dass bei stark schwankenden Rohmaterialien ein Einschmelzen dieses Materials mit einem minimalen Wert des bezogenen elektrischen Energieverbrauches möglich ist. Der Ofentransformator ist mit einem Lastschalter versehen und die Ausgangsspannung an der Sekundärseite des Transformators ist somit einstellbar. Die Steuerung erfolgt durch Ändern der Abgriffe des Ofentransformators oder durch Anpassen der Strom-Arbeitspunkte, beides, um die Länge des Lichtbogens zu ändern. Dabei wird die Stärke des von der Sekundärseite des Ofentransformators zur Lichtbogenelektrode fließenden elektrischen Stromes gemessen. Wird der Lichtbogenofen mit einem elektrischen Arbeitspunkt betrieben, der auf diese Weise geregelt ist, dann wird der elektrische Energieverbrauch bei dem Einschmelzprozess erniedrigt und es kann der bezogene elektrische Energieverbrauch minimal gehalten werden.

Die deutsche Patentanmeldung DE 10 2009 017 196 A1 offenbart einen Stufenschalter mit Halbleiter-Schaltelementen zur unterbrechungslosen Umschaltung zwischen festen Stufenschalterkontakten, die mit Wicklungsanzapfungen eines Stufentransformators elektrisch verbunden sind. Dabei ist jeder der festen Stufenschalterkontakte direkt oder, während der Umschaltung, über die zwischengeschalteten Halbleiter-Schaltelemente mit einer Lastableitung verbindbar. Die Lastableitung weist feste, geteilte Ableitkontaktstücke auf, damit die Halbleiter-Schaltelemente im stationären Betrieb von der Transformatorenwicklung galvanisch getrennt sind. Für Stufenschalter mit Halbleiter-Schaltelementen hingegen ergeben sich verschiedene Nachteile. Durch das dauerhafte Anliegen der Betriebsspannung und die Beanspruchung der Leistungselektronik durch Blitzstoßspannung sind hohe Isolationsabstände erforderlich, was unerwünscht ist.

Wie aus dem Stand der Technik bekannt, sind die elektrischen Elemente für eine Steuerung bzw. Regelung des Lichtbogenofenbetriebs ein Ofentransformator, eine Drosselspule und ein Elektrodentragarmsystem. Die Energiebereitstellung für die Drehstromlichtbogenöfen erfolgt über Ofentransformatoren mit einem integrierten Stufenschalter. Durch die Transformatorstufen kann der entsprechende Energieeintrag eingestellt werden.

Eine unter Last schaltbare Drosselspule, die dem Transformator vorgeschaltet ist, dient zur Regelung der Reaktanz des Stromkreises und ermöglicht dadurch einen Ofenbetrieb mit stabilen Lichtbögen sowie eine Begrenzung des Kurzschlussstroms. In Abhängigkeit vom Prozessfortschritt wird die geeignete Stufe sowohl beim Transformator als auch bei der Seriendrossel ausgewählt. Dies kann durch einen manuellen Eingriff vom Ofenbediener, durch eine integrierte Steuerung oder Regelung erfolgen.

Bei der manuellen Steuerung kann ein erfahrener Ofenbediener anhand der Schallemission des Ofens und dem Erscheinungsbild des Schmelzgutes den Prozess beurteilen. Bei kritischen Situationen (z.B. frei brennender Lichtbogen) wird die Transformatorstufe angepasst.

Bei der automatischen Steuerung werden die Transformatorstufen und ggf. die Drosselstufen abhängig vom aktuellen Energieeintrag angepasst. Grundsätzlich wird in der Anfangsphase "Bohrphase" eine hohe Induktivität benötigt, um den Lichtbogen möglichst stabil zu halten (OLTC Drossel == höchste Stufe). In der letzten Phase "flüssiges Bad" wird die Seriendrossel ausgeschaltet, um die Blindleistung zu reduzieren.

In der Bohrphase wird eine niedrigere Spannungsstufe (kurze Lichtbogen) gewählt, um die feuerfeste Auskleidung des Ofens (Feuerfest) sowie den Ofendeckel zu schonen. Nachdem der Lichtbogen von der schäumenden Schlacke eingehüllt ist, wird die höchste Spannungsstufe gewählt, um den größten Energieeintrag in die Schmelze zu erreichen. In der letzten Phase wird eine etwas niedrigere Stufenspannung gewählt, dafür wird ein maximal hoher Strom eingestellt, um den hohen Energieeintrag zu gewährleisten.

Die oben erwähnten Vorgaben bilden, insbesondere bei den manuellen und automatischen Steuerungen, den tatsächlichen Prozesszustand nur sehr unzureichend ab. Auch die neuesten Regelungen sind ebenfalls nicht in der Lage auf die schnellen Veränderungen im System mit den geeigneten Zeitkonstanten (z.B. im Millisekundenbereich) zu reagieren.

Hinsichtlich der Stufenschalter in Ofentransformatoren und Drosselspulen werden die hohen Schalthäufigkeiten je nach verschiedensten Schaltstrategien der Kunden als ein technischer Stressfaktor betrachtet. Es ist in erster Linie auf Kontaktabbrand sowie Abnutzung der mechanischen Bauteile in den Stufenschaltern zurückzuführen.

Da die Wartungsarbeit an Stufenschaltern in der Regel einen hohen Aufwand und vor allem kostenintensive Produktionsunterbrechung bedeutet, ist es für die Betreiber durchaus wünschenswert, das Wartungsintervall zu verlängern, um den Wartungsaufwand des Stufenschalters möglichst zu verringern.

Es ist Aufgabe der Erfindung, eine Vorrichtung zur prozessgeführten Leistungsregelung eines Lichtbogenofens zu schaffen, die es ermöglicht bei Veränderungen des Prozesses im Lichtbogenofen mit den geeigneten Zeitkonstanten (im Milisekundenbereich) einzugreifen und dabei gleichzeitig die Stillstandzeiten des Lichtbogenofens zu reduzieren und die Wartungsintervalle an den Stufenschaltern zu verlängern.

Die Aufgabe wird durch eine Vorrichtung zur prozessgeführten Leistungsregelung eines Lichtbogenofens gelöst, die die Merkmale des Anspruchs 1 umfasst.

Eine weitere Aufgabe der Erfindung ist, ein Verfahren zur prozessgeführten Leistungsregelung eines Lichtbogenofens zu schaffen, das es ermöglicht bei Veränderungen des Prozesses im Lichtbogenofen mit den geeigneten Zeitkonstanten (im Milisekundenbereich) einzugreifen und dabei gleichzeitig die Sillstandzeiten des Lichtbogenofens zu reduzieren und die Wartungsintervalle an Stufenschaltern zu verlängern.

Die Aufgabe wird durch ein Verfahren zur prozessgeführten Leistungsregelung eines Lichtbogenofens gelöst, dass die Merkmale des Anspruchs 5 umfasst.

Die erfindungsgemäße Vorrichtung zur prozessgeführten Leistungsregelung eines Lichtbogenofens zeichnet sich dadurch aus, dass der Laststufenschalter ein Halbleiterstufenschalter ist.

Gemäß einer möglichen Ausführungsform, kann jeder Elektrode ein Ofentransformator zugeordnet sein, dessen Wicklungsanzapfungen der Primärseite mittels jeweils eines Halbleiterstufenschalters schaltbar ist und dass die Sekundärseite eines jeden Ofentransformators mit der Elektrode verbunden ist.

Die Sensortypen, welche für die Bestimmung der Regelparameter bzw. Messgrößen herangezogen werden, sind thermische Sensoren und/oder optische Sensoren und/oder akustische Sensoren und/oder Körperschallsensoren. Alle Sensoren sind mit der Steuer- und Regeleinheit verbunden.

Die Steuer- und Regeleinheit ist mit dem Halbleiterstufenschalter kommunikativ verbunden, so dass in Abhängigkeit von den Messgrößen der Sensortypen und im Vergleich mit einem Sollwert, die an den Elektroden anliegenden aktuellen Spannung regelbar ist.

Das erfindungsgemäße Verfahren zeichnet sich dadurch aus:
- dass mittels mehrerer Sensortypen aktuelle Betriebsparameter des Lichtbogenofens erfasst und an eine Steuer- und Regeleinheit übergeben werden, mittel der eine Kritizitätszahl bestimmt wird; und
- dass in Abhängigkeit vom Wert der bestimmten Kritizitätszahl mit mindestens einem Halbleiterstufenschalter eine Beschaltung von Anzapfungen an einer Primärseite mindestens eines Ofentransformators derart beeinflusst werden, dass der Zustand des Lichtbogenofens in einem unkritischen Betriebszustand gehalten oder in einen unkritischen Betriebszustand gebracht wird.

Für gewöhnlich hat der Lichtbogenofen drei Elektroden, mit denen thermische Energie in den Lichtbogenofen eingebracht wird. Die Elektroden sind mit einer Sekundärseite des Ofentransformators verbunden und über die Beschaltung der Anzapfungen auf der Primärseite des Ofentransformators werden somit drei sekundäre Stränge mit einer geänderten Spannung beaufschlagt. Die Elektroden werden gemäß einer Ausgestaltung des Verfahrens symmetrisch mit einer erforderlichen elektrischen Energiemenge versorgt, so dass der Zustand des Lichtbogenofens im unkritischen Betriebszustand gehalten oder in einen unkritischen Betriebszustand gebracht wird.

Gemäß einer weiteren Ausgestaltung des erfindungsgemäßen Verfahrens werden mit dem Halbleiterstufenschalter die Außenleitungen der Elektroden mit einer unsymmetrischen Spannung beaufschlagt. Damit werden die drei sekundären Stränge unsymmetrisch mit einer erforderlichen elektrischen Energiemenge versorgt werden, so dass der Zustand des Lichtbogenofens im unkritischen Betriebszustand gehalten oder in einen unkritischen Betriebszustand gebracht wird. Hierzu sind unsymmetrisch einstellbare Außenleiterspannungen erforderlich. Die an den einzelnen Lichtbögen anliegenden Spannungen unterscheiden sich typischerweise betragsmäßig um bis zu 10 %.

Der Lichtbogenofen besitzt drei Elektroden, mit denen thermische Energie in den Lichtbogenofen eingebracht wird. Jede der Elektroden ist mit einer Sekundärseite eines ihr zugeordneten Ofentransformators verbunden und über die Beschaltung der Anzapfungen auf der Primärseite des jeweiligen Ofentransformators werden die Lichtbögen mit einer entsprechenden Energiemenge versorgt. Die Energiezufuhr ist dabei derart ausgestaltet, dass der Zustand des Lichtbogenofens im unkritischen Betriebszustand gehalten oder in einen unkritischen Betriebszustand gebracht wird. Jeder der Lichtbögen ist unabhängig von den anderen Lichtbögen des Lichtbogenofens steuerbar.

Die Kritizitätszahl wird aus den Betriebsparametern des Lichtbogenofens berechnet, die sich aus dem thermischen Zustand eines Gefäßes des Lichtbogenofens und/oder einer optischen Erfassung brennender Lichtbögen und/oder dem vom Lichtbogenofen abgegebenen Schall oder Körperschall zusammensetzt.

Die Regelung der elektrischen Größen wird bei Lichtbogenöfen in zwei Bereichen durchgeführt. Das übergeordnete Prozessleitsystem gibt die sekundäre Außenleiterspannung (bzw. die Transformatorstufe) und den Strom-Sollwert vor. Die untergeordnete Elektrodenregelung regelt über die Lichtbogenlängen den Strom und gewährleistet damit, im Mittel, das Einhalten des vorgegebenen Sollwertes. Die gegenwärtige Erfindung betrifft das übergeordnete Prozessleitsystem, wobei die Regelung der Außenleiterspannungen berücksichtigt wird.

Im ersten Schritt werden der Prozesszustand des bzw. frei brennende Lichtbögen erfasst. Dies kann mit Hilfe von Temperatur-, Körperschall- oder Strahlungsmessung erfolgen. Ausgehend von den Messwerten kann im nächsten Schritt die so genannte Kritizitätszahl bestimmt werden. Die Kritizitätszahl wird in Prozent angegeben und beschreibt den aktuellen Zustand des Schmelzprozesses. Bei 0 % ist der Zustand nicht kritisch. 100 % ist höchste Stufe und der Zustand des Schmelzprozesses ist äußerst kritisch. Die Leistung des Lichtbogenofens wird nun abhängig von der aktuellen Kritizitätszahl geregelt. Liegt die Kritizitätszahl beispielsweise im Bereich von 0 bis 30 % liegt weiterhin die maximale Leistung am Lichtbogenofen an. Liegt die Kritizitätszahl beispielsweise zwischen 30 % bis 60 % wird die Leistung linear reduziert. Liegt die Kritizitätszahl ab 60 % wird die geringste Leistung eingestellt.

Durch die Erweiterung des Regelalgorithmus um die strangspezifische Regelung über unsymmetrische Außenleiterspannungen als Stellgröße, wird eine höhere Betriebsmittelschonung erreicht, weil die für den Feuerfestverschleiß verantwortlichen Hotspots, durch die neuartige Regelung gezielt vermieden werden. Unter unsymmetrischer Leistungsregelung versteht man eine unsymmetrische Veränderung der Außenleiterspannungen. Bei dem Halbleiterstufenschalter soll der erforderliche Stellbereich für die Spannungsunsymmetrie etwa ±10 % betragen. Die Taktfrequenz liegt dabei in einer Größenordnung von 1 s.

Diese und andere Merkmale und Vorteile der verschiedenen hier offenbarten Ausführungsformen werden mit Bezug auf die folgende Beschreibung und die Zeichnungen besser verständlich, wobei gleiche Bezugszeichen durchweg gleiche Elemente bezeichnen. Es zeigen:
Figur 1 eine schematische Darstellung eines Systems mit zur Schmelzen von Metall mittels eines Lichtbogenofens;
Figur 2 eine schematische Ansicht der räumlichen Anordnung der Elektroden im Lichtbogenofen und der Zuordnung von Sensoren zu den Elektroden;
Figur 3 eine schematische Darstellung der Einbindung der thermisch-basierten Leistungsregelung in die Gesamtregelung des Lichtbogenofens;
Figur 4 eine schematische Ansicht des Ablaufdiagramms der thermisch-basierten Leistungsregelung des Lichtbogenofens; und
Figur 5 eine Darstellung des funktionalen Zusammenhangs der Kritizitätszahl und der aktuell wirkenden Leistung.

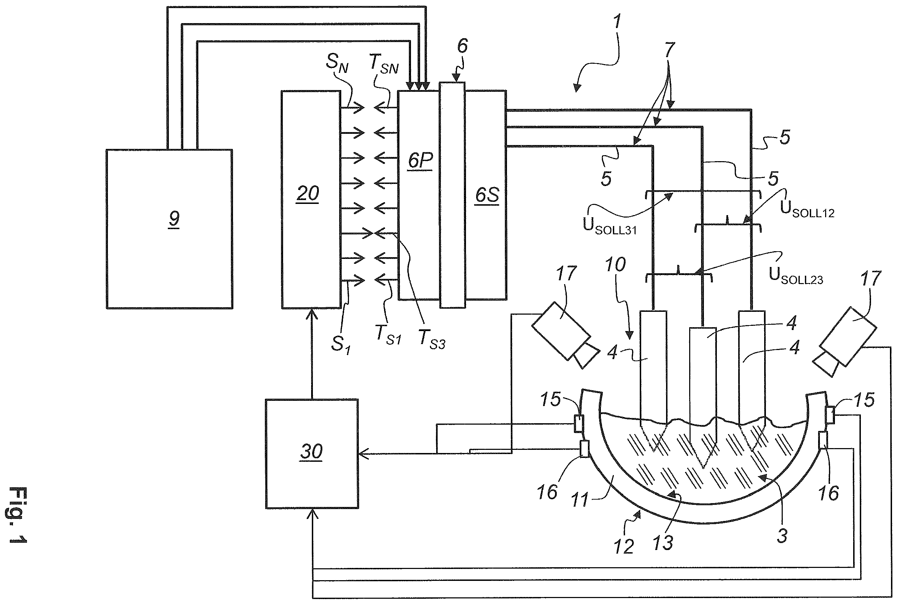

Figur 1 zeigt eine schematische Darstellung eines Systems 1 zum Schmelzen von Metall mittels eines Lichtbogenofens 10. Der Lichtbogenofens 10 besteht aus einem Ofengefäß 11, in dem Stahlschrott eingeschmolzen und eine Schmelze 3 erzeugt wird. Das Ofengefäß 11 kann noch mit einem Deckel (nicht dargestellt versehen). Wandung 12 und Deckel sich mit einer Wasserkühlung versehen. Je nach Betriebsart des Lichtbogenofens 10 hat dieser eine oder drei Elektroden 4. Bei einem Gleichstrom-Elektrolichtbogenofen wird eine Elektrode 4 verwendet. Bei einem Drehstrom-Lichtbogenofen10 werden drei Elektrode 4 verwendet. Die nachlogende Beschreibung schildert das Prinzip der Erfindung am Beispiel eines Drehstrom-Lichtbogenofens. Ein Feuerfestmatial (nicht dargestellt) kleidet eine Innenwandung 13 des Lichtbogenofens 10 aus.

Die Elektroden 4 sind an einem Tragarm (nicht dargestellt) angebracht und können bei Bedarf in das Ofengefäß 11 eingefahren werden. Jede der Elektroden 4 ist mit einer Außenleitung 5 ausgestattet, die alle mit einer Sekundärseite 6S eines Ofentransformators 6 verbunden sind. Die Außenleitung 5, die Elektrode 4 und der Lichtbogen (nicht dargestellt) bilden somit eine Phase bzw. einen Strang 7 des Drehstromkreises. Eine Primärseite 6P des Ofentransformators 6 wird aus einem Energieversorgungsnetz 9 mit der erforderlichen Hochspannung versorgt. Mit der Primärseite 6P des Ofentransformators 6 ist ein Laststufenschalter 20 verbunden, der als Halbleiterstufenschalter ausgebildet ist.

Eine Steuer- und Regeleinheit 30 wirkt mit dem Halbleiterstufenschalter 20 zusammen, um Anzapfungen des Ofentransformators 6 auf der Primärseite 6P derart zu schalten, dass die mit einer entsprechender Außenleiterspannung und entsprechenden Strom versorgt werden, dass der Lichtbogenofen 3 innerhalb eines vorgegebenen Sollbereichs arbeitet. Die Primärseite 6P des Ofentransformators 6 hat mehrere Wicklungsanzapfungen T_{S1},...,T_{SN}, die von den Halbleiterschaltelementen S1,..., SN des Halbleiterstufenschalter 20. Die Steuer- und Regeleinheit 30 erhält Input von mehreren Sensortypen 15, 16 und 17, die dem Lichtbogenofens10 zugeordnet sind. Aus den Eingangsdaten ermittelt die Steuer- und Regeleinheit 30 den Schaltablauf des Halbleiterstufenschalters 20 und die erforderliche Beschaltung der Wicklungsanzapfungen T_{S1},...,T_{SN}, der Sekundärseite 6S des Ofentransformators 6, so dass der Lichtbogenofens 10 innerhalb eines vorgegebenen Bereichs der Ofenleistung arbeitet.

Die mehreren Sensortypen 15, 16 und 17 erfassen hierzu den thermischen Zustand des Lichtbogenofens 10. Die Sensortypen 15, 16 und 17 sind als thermische Sensoren 15 und/oder optische Sensoren 17 und/oder akustische Sensoren 16 ausgebildet und mit der Steuer- und Regeleinheit 30 verbunden. Der aktuelle thermische Zustand des Lichtbogenofens 10 kann mit Hilfe von Temperaturmessungen, Körperschallmessungen oder Strahlungsmessungen erfolgen. Für die Temperaturmessungen kann z.B. ein Temperatursensor eingesetzt werden, der z.B. die Temperatur des Kühlwassers misst und somit einen Rückschluss auf die aktuelle thermische Belastung 10 erlaubt. Körperschallmessungen können mit akustischen Sensoren durchgeführt werden, wobei aus den Messergebnissen ebenfalls auf die Temperaturentwicklung im Lichtbogenofen 10 geschlossen werden kann. Für Strahlungsmessungen können z.B. Kameras eingesetzt werden, so dass hiermit ebenfalls auf die Temperaturentwicklung im Lichtbogenofen 10 geschlossen werden kann. Aus den aufgenommenen Daten wird mittels der Steuer- und Regeleinheit 30 eine Kritizitätszahl bestimmt. In Abhängigkeit vom Wert der bestimmten Kritizitätszahl wird mit mindestens einem Halbleiterstufenschalter 20 eine Beschaltung von Wicklungsanzapfungen T_{S1}...T_{SN} an einer Primärseite 6P eines Ofentransformators 6 derart beeinflusst, dass der Zustand des Lichtbogenofens 10 in einem unkritischen Betriebszustand gehalten oder in einen unkritischen Betriebszustand gebracht wird.

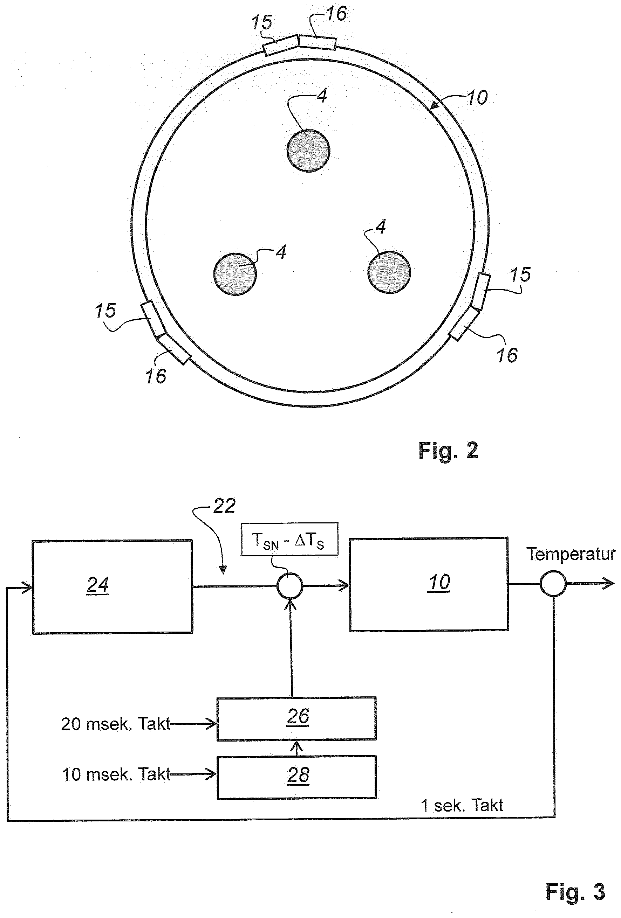

In Figur 2 ist eine schematische Ansicht der räumlichen Anordnung der Elektroden 4 im Lichtbogenofen 10 und die räumliche Zuordnung der thermischen Sensoren 15 und der akustischen Sensoren 16 zu den Elektroden 4 dargestellt. In der hier dargestellten Ausführungsform besitzt der Lichtbogenofen 10 drei Elektroden 4, mit denen thermische Energie in den Lichtbogenofen eingebracht wird. Die Elektroden 4 sind in Form eines Dreiecks angeordnet. Jeder Elektrode 4 ist räumlich ein thermischer Sensor 15 und ein akustischer Sensor 16 zugeordnet, so dass der individuelle thermische Zustand des Lichtbogenofens 10 im Bereich einer jeden Elektrode 4 erfasst werden kann. Somit können die Außenleitungen 5 der Elektroden 4 mit unsymmetrischen Außenleiterspannungen U_{SOLL12}, U_{SOLL23} oder U_{SOLL31} beaufschlagt werden, so dass die Elektroden 4 unsymmetrisch mit einer erforderlichen elektrischenEnergiemenge versorgt werden.

Figur 3 zeigt eine schematische Darstellung der Einbindung der prozessgeführten Leistungsregelung in die Gesamtregelung 22 des Lichtbogenofens 10. Die Gesamtregelung des Lichtbogenofens 10, die letztendlich über dem Halbleiterstufenschalter 20 realisiert wird. Die prozessgeführte Leistungsregelung 24 arbeitet mit einer Taktfrequenz im Bereich von 1 Sekunde. Die Überstromregelung 26 arbeitet mit einer Taktfrequenz im Bereich von 20 Millisekunden. Die Flicker-Regelung 28 arbeitet mit einer Taktfrequenz im Bereich von 10 Millisekunden. Die Taktfrequenz entspricht für jede der Regelungen der der Wiederholrate der entsprechenden Regelungen. Als Ergebnis der Messungen kann dann mittels des Halbleiterstufenschalters 20 von auf diejenige Wicklungsanzapfung T_{S1}...T_{SN} an einer Primärseite 6P des Ofentransformators 6 umgeschaltet werden, damit die erforderliche Regelung des Lichtbogenofens 10 erfolgt.

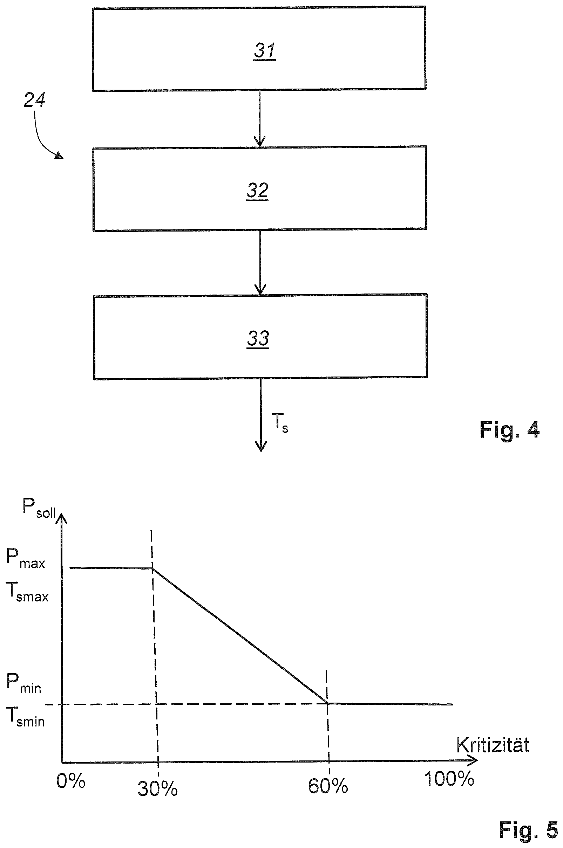

In Figur 4 ist eine schematische Ansicht des Ablaufdiagramms der thermisch-basierten Leistungsregelung des Lichtbogenofens 10 dargestellt. Im ersten Schritt 31 werden der Prozesszustand 11 und insbesondere frei brennende Lichtbögen erfasst. Dies kann, wie bereits oben erwähnt, mit mehreren Sensortypen 15, 16 und 17 erfolgen. Die Sensortypen 15, 16 und 17 sind als thermische Sensoren 15 und/oder optische Sensoren 17 und/oder akustische Sensoren 16 ausgebildet und mit der Steuer- und Regeleinheit 30 verbunden. Somit können Temperatur-, Körperschall- und/oder Strahlungsmessung erfolgen. Ausgehend von den Messewerten kann im zweiten Schritt 32 eine so genannte Kritizitätszahl bestimmt werden. Die Kritizitätszahl wird in Prozent angegeben und beschreibt den aktuellen Zustand des Schmelzprozesses. Bei 0 % ist der Zustand nicht kritisch, 100 % ist höchste Stufe erreicht und eine Änderung der Leistung des Lichtbogenofens 10 ist unbedingt erforderlich. In einem dritten Schritt 33 wird die Leistung des Lichtbogenofens 10 nun abhängig von der aktuellen Kritizitätszahl geregelt. Hierbei ist die thermische Trägheit des Ofengefäßes 11 Lichtbogenofens 10 zu berücksichtigen. Die Prozentwerte bzw. Prozentbereiche der Kritizitätszahl, die einen Eingriff durch den Halbleiterstufenschalter 20 erfordern, können von Betreiber des Lichtbogenofens 20 festgelegt werden.

Figur 5 zeigt eine Darstellung des funktionalen Zusammenhangs der Kritizitätszahl und der aktuell im Lichtbogenofen 10 wirkenden Leistung P. Liegt z.B. die Kritizitätszahl zwischen 0 und 30 % ist keine Regelung erforderlich und der Lichtbogenofen 20 kann mit der maximalen Leistung Pₘₐₓ betrieben werden. Liegt z.B. die Kritizitätszahl zwischen von 30% und 60% kann z.B. eine lineare Reduzierung der wirkenden Leistung P erfolgen. Liegt z.B. die Kritizitätszahl über 60 % wird eine minimale Leistung Pₘᵢₙ des Lichtbogenofens 10 eingestellt. Durch die Realisierung des Regelalgorithmus im Zusammenspiel mit dem Halbleiterschalter 20 kann strangspezifische Regelung über die Außenleiterspannungen U_{SOLL12}, U_{SOLL23} oder U_{SOLL31} als Stellgröße erfolgen. Mit dem Halbleiterschalter 20 ist ein schnelles Schalten und ein Überspringen von mehr als einer Wicklungsanzapfung (T_{S1}...T_{SN}) auf der Primärseite 6P des Ofentransformators 6 möglich. Somit liegt an den Strängen 7 die für die Regelung erforderlichen Außenleiterspannungen U_{SOLL12}, U_{SOLL23} und U_{SOLL31} an, womit eine höhere Betriebsmittelschonung erreicht wird, weil die für den Feuerfestverschleiß verantwortlichen Hotspots, durch die neuartige, schnelle und variable Regelung gezielt vermieden werden.

Die Regelung der Leistung des Lichtbogenofens 10 kann mit dem Halbleiterschalter 20 symmetrisch oder unsymmetrisch erfolgen. Unter einer unsymmetrischen Leistungsregelung des Lichtbogenofens 10 versteht man eine nicht unsymmetrische Veränderung der geregelten Außenleiterspannungen U_{SOLL12}, U_{SOLL23} und U_{SOLL31} an der Stränge 7. Bei dem Halbleiterschalter 20 soll der erforderliche Stellbereich für die Unsymmetrie der Außenleiterspannungen U_{SOLL12}, U_{SOLL23} und U_{SOLL31} zwischen den Strängen 7 des Halbleiterschalters 20 etwa bis zu ±10 % betragen. Wie bereits erwähnt liegt dabei die Taktfrequenz in einer Größenordnung von 1s.

Die Erfindung wurde in Bezug auf zwei Ausführungsformen beschrieben. Es ist jedoch für einen Fachmann selbstverständlich, dass Änderungen und Abwandlungen der Erfindung gemacht werden können, ohne dabei den Schutzbereich der nachstehenden Ansprüche zu verlassen.

### Bezugszeichenliste

- Nr.: Bezeichnung
- 1: Vorrichtung
- 3: Schmelze
- 4: Elektrode
- 5: Außenleitung
- 6: Ofentransformator
- 6P: Primärseite
- 6S: Sekundärseite
- 7: Strang, Phase
- 9: Energieversorgungsnetz
- 10: Lichtbogenofen
- 11: Ofengefäß
- 12: Außenwandung
- 13: Innenwandung
- 15: Sensortyp (thermisch)
- 16: Sensortyp (Körperschall)
- 17: Sensortyp (Strahlung)
- 20: Laststufenschalter, Halbleiterstufenschalter
- 22: Gesamtregelung
- 24: Thermisch basierte Leistungsregelung
- 26: Überstromregelung
- 28: Flicker-Regelung
- 30: Steuer- und Regeleinheit
- 31: erster Schritt
- 32: zweiter Schritt
- 33: dritter Schritt
- Pmax: maximale Leistung
- Pₘᵢₙ: maximale Leistung
- P: wirkende Leistung
- T_{S1},...T_{SN}: Wicklungsanzapfung, Transformatorstufe
- S₁...S_{N}: Halbleiterschaltelement

## Patentansprüche

1. Vorrichtung zur prozessgeführten Leistungsregelung eines Lichtbogenofens (10), umfassend
- mehrere Sensortypen (15, 16, 17) zur Erfassung aktueller Betriebsparameter des Lichtbogenofens (10) in Abhängigkeit von der Zeit;
- eine Steuer- und Regeleinheit (30);
- mindestens einen Ofentransformator (6) mit einer Primärseite (6P) und einer Sekundärseite (6S);
- mindestens einen Laststufenschalter (20), der Wicklungsanzapfungen (T_{S1},...,T_{SN}) der Primärseite (6P) des Ofentransformators (6) schaltet;
wobei
- drei Elektroden (4) mit der Sekundärseite (6S) des mindestens einen Ofentransformators (6) elektrisch verbunden sind und jeweils einen Strang (7) definieren,
**dadurch gekennzeichnet, dass**
- der Laststufenschalter ein Halbleiterstufenschalter (20) ist.

2. Vorrichtung nach dem vorigen Anspruch, wobei
- jeder Elektrode (4) ein Ofentransformator (6) zugeordnet ist, dessen Wicklungsanzapfungen (T_{S1},...,T_{SN}) mittels jeweils eines Halbleiterstufenschalters (20) schaltbar ist;
- die Sekundärseite (6S) eines jeden Ofentransformators (6) mit der Elektrode (4) verbunden ist.

3. Vorrichtung nach einem der vorigen Ansprüche, wobei die Sensortypen (15, 16, 17) thermische Sensoren (15) und/oder optische Sensoren (17) und/oder akustische Sensoren (16) sind, die mit der Steuer- und Regeleinheit (30) verbunden sind.

4. Vorrichtung nach einem der vorigen Ansprüche, wobei die Steuer- und Regeleinheit (30) mit dem Halbleiterstufenschalter (20) kommunikativ verbunden ist, so dass dieser in Abhängigkeit von den Messgrößen der Sensortypen (15, 16, 17) und im Vergleich mit einem Sollwert der zwischen aufeinanderfolgenden Strängen (7) anliegenden aktuellen Außenleiterspannungen (Uist12, Uist23, Uist 31) regelbar ist.

5. Verfahren zur thermisch-basierten Leistungsregelung eines Lichtbogenofens (10), mit den Schritten, dass
- mittels mehrerer Sensortypen (15, 16, 17) aktuelle Betriebsparameter des Lichtbogenofens (10) erfasst und an eine Steuer- und Regeleinheit (30) übergeben werden, mittels der eine Kritizitätszahl bestimmt wird;
- in Abhängigkeit vom Wert der bestimmten Kritizitätszahl mit mindestens einem Halbleiterstufenschalter (20) eine Beschaltung von Wicklungsanzapfungen (TS1...TSN) an einer Primärseite (6P) mindestens eines Ofentransformators (20) derart beeinflusst wird, dass der Zustand des Lichtbogenofens (10) in einem unkritischen Betriebszustand gehalten oder in einen unkritischen Betriebszustand gebracht wird.

6. Verfahren nach dem vorigen Anspruch, wobei
- der Lichtbogenofen (10) drei Elektroden (4) besitzt, mit denen thermische Energie in den Lichtbogenofen (10) eingebracht wird,
- wobei die Elektroden (4) mit einer Sekundärseite (6S) des Ofentransformators (6) verbunden sind,
- wobei jede Elektrode (4) zusammen mit einer Außenleitung (5) einen Strang (7) bildet und über die Beschaltung der Wicklungsanzapfungen (TS1...TSN) auf der Primärseite (6P) des Ofentransformators (6) die drei Stränge mit einer geänderten Außenleiterspannung (USOLL12, USOLL23, USOLL31) beaufschlagt werden, dass Lichtbögen, die von den Elektroden (4) ausgehen, symmetrisch mit einer erforderlichen elektrischen Energiemenge versorgt werden, dass der Zustand des Lichtbogenofens (10) im unkritischen Betriebszustand gehalten oder in einen unkritischen Betriebszustand gebracht wird.

7. Verfahren nach dem vorigen Anspruch, wobei
- mit dem Halbleiterstufenschalter (20) die Außenleitungen (5) der Elektroden (4) mit unsymmetrischen Außenleiterspannungen beaufschlagtwerden,
- wobei die Lichtbögen , die von den Elektroden (4) ausgehen, unsymmetrisch mit einer erforderlichen elektrischen Energiemenge versorgt werden, dass der Zustand des Lichtbogenofens (10) im unkritischen Betriebszustand gehalten oder in einen unkritischen Betriebszustand gebracht wird.

8. Verfahren nach dem vorigen Anspruch, wobei sich die zwischen den drei Strängen (7) anliegenden Außenleiterspannungen (USOLL12, USOLL23, USOLL31) und somit die wirkende Leistung betragsmäßig um typisch bis zu 10% unterscheiden.

9. Verfahren nach Anspruch 5, wobei
- der Lichtbogenofen (10) drei Elektroden (4) besitzt, mit denen thermische Energie in den Lichtbogenofen (10) eingebracht wird;
- jede der Elektroden (4) mit einer Sekundärseite (6S) eines ihr zugeordneten Ofentransformators (6) verbunden ist und über die Beschaltung der Wicklungsanzapfungen (TS1...TSN) auf der Primärseite (6S) des jeweiligen Ofentransformators (6) mit einer entsprechenden elektrischen Energiemenge versorgt wird, dass der Zustand des Lichtbogenofens (6) im unkritischen Betriebszustand gehalten oder in einen unkritischen Betriebszustand gebracht wird;
- jeder der drei Stränge (7) unabhängig von den anderen Strängen (7) des Lichtbogenofens (10) steuerbar ist.

10. Verfahren nach einem der vorigen Ansprüche, wobei die Kritizitätszahl aus den Betriebsparametern des Lichtbogenofens (10) berechnet wird, die sich aus dem thermischen Zustand eines Ofengefäßes (11) des Lichtbogenofens (10) und/oder einer optischen Erfassung brennender Lichtbögen und/oder dem vom Lichtbogenofen (10) abgegebenen Schall oder Körperschall zusammensetzt.

## Claims

1. A device for process-based power regulation of an electric arc furnace (10), the device comprising
- a plurality of sensor types (15, 16, 17) for detecting presently active operating parameters of the electric arc furnace (10) in dependence on time;
- a control and regulating unit (30);
- at least one furnace transformer (6) with a primary side (6P) and a secondary side (6S);
- at least one on-load tap changer (20), which switches winding taps (TS1, ..., TSN) of the primary side (6P) of the furnace transformer (6);
wherein
- three electrodes (4) are electrically connected to the secondary side (6S) of the at least one furnace transformer (6) and each define one line (7),
**characterised in that**
- the on-load tap changer is a semiconductor tap changer (20).

2. The device according to the previous claim, wherein
- a furnace transformer (6) is assigned to each electrode (4) with the winding taps (TS1, ..., TSN) of said furnace transformer (6) each being switchable by means of a semiconductor tap changer (20);
- the secondary side (6S) of each of the furnace transformers (6) is connected to the electrode (4).

3. The device according to one of the previous claims, wherein the sensor types (15, 16, 17) are thermal sensors (15) and/or optical sensors (17) and/or acoustic sensors (16) that are connected to the control and regulating unit (30).

4. The device according to one of the previous claims, wherein the control and regulating unit (30) is communicatively connected to the semiconductor tap changer (20) such that said semiconductor tap changer (20) is regulatable in dependence on the meas-urands from the sensor types (15, 16, 17) and in comparison with a setpoint of the presently applied phase voltages (Uist12, Uist23, Uist31) between consecutive lines 7.

5. A method for thermally based power regulation of an electric arc furnace (10), with the steps that
- the presently active operating parameters of the electric arc furnace (10) are detected by means of a plurality of sensor types (15, 16, 17) and transmitted to a control and regulating unit (30), by means of which a criticality value is determined;
- a switching of winding taps (TS1, ..., TSN) at a primary side (6P) of at least one furnace transformer (6) is influenced by means of at least one semiconductor tap changer (20), in dependence on the value of the determined criticality, in such a manner that the state of the electric arc furnace (10) is maintained in an uncritical operating state or brought into an uncritical operating state.

6. The method according to the previous claim, wherein
- the electric arc furnace (10) has three electrodes (4) by means of which thermal energy is input into the electric arc furnace (10);
- wherein the electrodes (4) are connected to a secondary side (6S) of the furnace transformer (6);
- wherein each electrode (4), together with a phase conductor (5), forms a line (7), and a modified phase voltage (USOLL12, USOLL23, USOLL31) is applied to the three lines via the switching of the winding taps (TS1, ..., TSN) on the primary side (6P) of the furnace transformer (6) such that electric arcs emitting from the electrodes (4) are symmetrically supplied with a required amount of electrical energy so that the state of the electric arc furnace (10) is maintained in an uncritical operating state or brought into an uncritical operating state.

7. The method according to the previous claim, wherein
- asymmetrical phase voltages are applied to the phase conductors (5) of the electrodes (4) by means of the semiconductor tap changer (20);
- wherein the electric arcs emitting from the electrodes (4) are asymmetrically supplied with a required amount of electrical energy so that the state of the electric arc furnace (10) is maintained in an uncritical operating state or brought into an uncritical operating state.

8. The method according to the previous claim, wherein the phase voltages (USOLL12, USOLL23, USOLL31) applied between the three lines (7), and thus the active power, typically differ by up to 10% in terms of amount.

9. The method according to claim 5, wherein
- the electric arc furnace (10) has three electrodes (4) by means of which thermal energy is input into the electric arc furnace (10);
- each of the electrodes (4) is connected to a secondary side (6S) of a furnace transformer (6) assigned to it and is supplied with a corresponding amount of electrical energy via the switching of the winding taps (TS1, ..., TSN) on the primary side (6S) of the particular furnace transformer (6) so that the state of the electric arc furnace (6) is maintained in an uncritical operating state or brought into an uncritical operating state;
- each of the three lines (7) is controllable independently of the other lines (7) of the electric arc furnace (10).

10. The method according to one of the previous claims, wherein the criticality value is calculated from the operating parameters of the electric arc furnace (10), which operating parameters are composed of the thermal state of a furnace vessel (11) of the electric arc furnace (10) and/or an optical detection of burning electric arcs and/or the sound or structure-borne sound emitted from the electric arc furnace (10).

## Revendications

1. Dispositif de régulation de puissance d'un four à arc électrique (10) selon un processus comprenant :
- plusieurs types de capteurs (15, 16, 17) pour saisir les paramètres de fonctionnement actuels du four à arc électrique (10) en fonction du temps,
- une unité de commande et de régulation (30),
- au moins un transformateur de four (6) avec un côté primaire (6P) et un côté secondaire (6S),
- au moins un changeur de prises en charge (20), qui commute les prises d'enroulement (TS1,... TSN) du côté primaire (6P) et du transformateur de four (6), dans lequel
- trois électrodes (4) sont reliées électriquement au côté secondaire (6S) du transformateur de four (6) et elles définissent chacune une ligne (7),
dispositif **caractérisé en ce que**
- le changeur de prises en charge est un changeur de prises semi-conducteur (20).

2. Dispositif selon la revendication précédente,
dans lequel
- un transformateur de four (6) est associé à chaque électrode (4) dont les enroulements de prise (TS1...TSN) sont commutés par un changeur de prises semi-conducteur (20), et
- le côté secondaire (6S) de chaque transformateur de four (6) est relié à l'électrode (4).

3. Dispositif selon l'une des revendications précédentes,
dans lequel
les types de capteur (15, 16, 17) sont des capteurs thermiques (15) et/ou des capteurs optiques (17) et/ou des capteurs acoustiques (16) reliés à l'unité de commande et de régulation (30).

4. Dispositif selon l'une des revendications précédentes,
dans lequel
l'unité de commande et de régulation (30) est reliée de façon à communiquer avec le changeur de prise semi-conducteur (20) de façon que celui-ci soit régulé en fonction des grandeurs de mesure des types de capteurs (15, 16, 17) et par comparaison à une valeur de consigne des tensions de lignes extérieures (Uist12, Uist23, Uist 31) appliquées entre les lignes successives (7).

5. Procédé de régulation de puissance à base thermique d'un four à arc électrique (10) comprenant les étapes suivantes consistant à
- saisir à l'aide de plusieurs types de capteurs (15, 16, 17) les paramètres de fonctionnements actuels du four à arc électrique (10) et les transmettre à une unité de commande et de régulation (30) qui détermine un nombre critique,
- influencer en fonction de la valeur du nombre critique déterminé, avec au moins un changeur de prises semi-conducteur (20), le branchement des prises d'enroulement (TS1...TSN) du côté primaire (6) d'au moins un transformateur de four (20) de façon que l'état du four à arc électrique (10) soit maintenu dans un état de fonctionnement non critique ou soit mis dans un état de fonctionnement non critique.

6. Procédé selon la revendication précédente,
selon lequel
- le four à arc électrique (10) a trois électrodes (4) qui fournissent l'énergie thermique au four à arc électrique (10),
- les électrodes (4) sont reliées au côté secondaire (6S) du transformateur de four (6),
- chacune des électrodes (4) forme avec un conducteur extérieur (5) une ligne (7) et par le branchement des prises d'enroulement (TS1...TSN) du côté primaire (6P) du transformateur de four (6), on applique aux trois lignes, les tensions de lignes extérieures modifiées (USOLL12, USOLL23, USOLL 31), on alimente les arcs électriques partant des électrodes (4) de manière symétrique avec la quantité d'énergie électrique nécessaire, on maintient l'état du four à arc électrique (10) dans un état de fonctionnement non critique ou on le met dans un état de fonctionnement non critique.

7. Procédé selon la revendication précédente,
selon lequel
- avec le changeur de prises semi-conducteur (20) on applique aux lignes extérieures (5) des électrodes (4), des tensions de lignes extérieures asymétriques,
- les arcs électriques partant des électrodes (4) étant ainsi alimentés de manière asymétrique avec la quantité d'énergie électrique nécessaire de façon à maintenir le four à arc électrique (10) dans un état de fonctionnement non critique ou à le mettre dans un état de fonctionnement non critique.

8. Procédé selon la revendication précédente,
selon lequel les tensions de lignes extérieures (USOLL12, USOLL23, USOLL 31) appliquées entre les trois lignes (7) et ainsi la puissance appliquée diffèrent en amplitude de manière caractéristique jusqu'à 10%.

9. Procédé selon la revendication 5,
selon lequel
- le four à arc électrique (10) a trois électrodes (4) pour lui fournir l'énergie thermique au four à arc électrique (10),
- chacune des électrodes (4) est reliée au côté secondaire (6S) du transformateur de four (6), associé et par le branchement des prises d'enroulement (TS1...TSN) du côté primaire du transformateur de four (6) respectif, elle est alimentée avec la quantité d'énergie électrique appropriée pour à maintenir le four à arc électrique (6) dans un état de fonctionnement non critique ou à le faire passer dans un état de fonctionnement non critique, et
- chacune des trois lignes (7) se commande indépendamment des autres lignes (7) du four à arc électrique.

10. Procédé selon l'une des revendications précédentes,
selon lequel on calcule le nombre critique à partir des paramètres de fonctionnement du four à arc électrique (10) qui se composent de l'état thermique de la cuve (11) du four à arc électrique (10) et/ou de la saisie optique des arcs électriques allumés et/ou du son ou du bruit de structure émis par le four à arc électrique (10).
